# EUROPÄISCHE PATENTSCHRIFT

(11) **EP 1 237 979 B1**
(45) Veröffentlichungstag und Bekanntmachung des Hinweises auf die Patenterteilung: **25.03.2009**
(21) Anmeldenummer: 00987349.8
(22) Anmeldetag: 05.12.2000
(51) Int. Cl.: C08G 18/67, C08G 18/73, C08G 18/75, C09D 5/03, C09D 175/16

(54) **PULVERSLURRY UND VERFAHREN ZUR HERSTELLUNG EINER FARB- UND/ODER EFFEKTGEBENDEN MEHRSCHICHTLACKIERUNG AUF EINEM GRUNDIERTEN ODER UNGRUNDIERTEN SUBSTRAT**
POWDER SLURRY AND METHOD FOR PRODUCING A COLOURED AND/OR DECORATIVE-EFFECT MULTI-LAYERED COATING ON A PRIMED OR UNPRIMED SUBSTRATE
COULIS PULVERULENT ET PROCEDE DE PRODUCTION D'UNE PEINTURE MULTICOUCHE CHROMOPHORE ET/OU DONNANT UN EFFET SUR UN SUBSTRAT AVEC OU SANS COUCHE DE FOND

(30) Priorität: 06.12.1999 DE 19958726
(43) Veröffentlichungstag der Anmeldung: 11.09.2002
(73) Patentinhaber: BASF Coatings AG, 48165 Münster (DE)
(72) Erfinder: MEISENBURG, Uwe, 47051 Duisburg (DE); BAUMGART, Hubert, 48163 Münster (DE); JOOST, Karl-Heinz, 48317 Drensteinfurt (DE); HASSE, Sandra, 59075 Hamm (DE)
(86) Internationale Anmeldenummer: PCT/EP2000/012191
(87) Internationale Veröffentlichungsnummer: WO 2001/042329

(56) Entgegenhaltungen:
- EP-A- 0 353 797
- EP-A- 0 742 239
- WO-A-98/54266
- CHEMICAL ABSTRACTS, vol. 116, no. 2, 13. Januar 1992 (1992-01-13) Columbus, Ohio, US; abstract no. 7347r, "Aqueous polyurethane compositions" Seite 27; XP000352276 & JP 03 166216 A (MITSUI TOATSU CHEMICALS) 18. Juli 1991 (1991-07-18)

## Beschreibung

Die vorliegende Erfindung betrifft ein neues Verfahren zur Herstellung einer farb-und/oder effektgebenden Mehrschichtlackierung auf einem grundierten oder ungrundierten Substrat. Des weiteren betrifft die vorliegende Erfindung eine neue Pulverslurry.

An Automobilserien- und -reparaturlackierungen werden von den Automobilherstellern und deren Kunden wachsende Anforderungen hinsichtlich der Korrosionsbeständigkeit, der mechanische Stabilität, beispielsweise Kratzfestigkeit gegenüber Waschbürsten, der Steinschlagfestigkeit und des optischen Gesamteindrucks, inklusive der optischen Effekte, gestellt. Bekanntermaßen wird dies in einem gewissen Umfang durch eine mehrschichtige Lackierung erfüllt, die auf einem Karosserieblech eine Elektrotauchlackierung, eine Füllerlackierung oder Steinschlagschutzgrundierung sowie eine farb-und/oder effektgebende Mehrschichtlackierung aus einer farb- und/oder effektgebenden Basislackierung und mindestens eine Klarlackierung übereinanderliegend enthält.

Darüber hinaus sollen aber die Lackierungen auch noch die in den letzten Jahren stetig gestiegenen ökologischen Anforderungen, wie die Reduktion des Gehalts an organischen Lösemitteln oder völlige Lösemittelfreiheit, erfüllen.

Im Zuge dieser Entwicklungen haben sich allmählich wäßrige Lacke durchsetzen können. So sind die Elektrotauchlacke bereits seit langem nahezu frei von leichtflüchtigen organischen Bestandteilen, insbesondere organischen Lösemitteln. Ebenso stehen wäßrige Beschichtungsstoff auf der Basis von Polyurethanen zur Verfügung, die der Herstellung von Füllerlackierungen oder Steinschlagschutzgrundierungen dienen (vgl. die Patentschriften DE-A-40 05 961 und EP-A-0 548 873).

Auch die Verwendung von Wasserbasislacken, wie sie beispielsweise in den Patentschrift DE-C-197 22 862 beschrieben werden, hat wesentliche Fortschritte mit sich gebracht und die Emissionen flüchtiger organischer Bestandteile nachhaltig verringert.

Inzwischen stehen auch lösemittelfreie oder weitgehend lösemittelfreie Klarlacke wie wäßrige Zweikomponenten(2K)- oder Mehrkomponenteri(3K, 4K)-Klarlacke, Pulverklarlacke, Pulverslurry-Klarlacke oder flüssige, lösemittelfreie, mit aktinischer Strahlung härtbare Klarlacke (100%-Systeme) zur Verfügung.

Bei der aktinischen Strahlung kann es sich um elektromagnetische Strahlung wie sichtbares Licht, UV-Licht oder Röntgenstrahlung oder um Korpuskularstrahlung wie Elektronenstrahlung handeln.

Wäßrige Zweikomponenten(2K)- oder Mehrkomponenten(3K, 4K)-Klarlacke gehen beispielsweise aus der deutschen Patentschrift DE-A-44 21 823 hervor. Zweikomponenten(2K)- oder Mehrkomponenten(3K, 4K)-Klarlacke enthalten bekanntermaßen als wesentliche Bestandteile hydroxylgruppenhaltige Bindemittel und Polyisocyanate als Vernetzungsmittel, welche bis zu ihrer Verwendung getrennt gelagert werden müssen.

Pulverklarlacke sind beispielsweise aus der deutschen Patentschrift DE-A-42 22 194 oder der Produkt-Information der Firma BASF Lacke + Farben AG, "Pulverlacke", 1990 bekannt. Pulverklarlacke enthalten als wesentliche Bestandteile bekanntermaßen epoxidgruppenhaltige Bindemittel und Polycarbonsäuren als Vernetzungsmittel.

Pulverslurry-Klarlacke sind beispielsweise aus der US-Patentschrift US-A-4,268,542, der internationalen Patentanmeldung WO 96/32452 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben. Pulverslurry-Klarlacke enthalten bekanntermaßen Pulverklarlacke in einem wäßrigen Medium dispergiert.

Mit aktinischer Strahlung härtbare Klarlacke gehen beispielsweise aus den Patentschriften EP-A-0 540 884, EP-A-0 568 967 oder US-A-4,675,234 hervor. Sie enthalten bekanntermaßen mit aktinischem Licht und/oder Elektronenstrahlung härtbare niedermolekulare, oligomere und/oder polymere Verbindungen, vorzugsweise strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner sowie gegebenenfalls einen oder mehrere Photoinitiatoren. Beispiele geeigneter strahlenhärtbarer Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel eingesetzt, die frei von aromatischen Struktureinheiten sind.

Aus der europäischen Patentanmeldung EP-A-0 928 800 ist ein thermisch und mit aktinischer Strahlung härtbarer Dual Cure-Beschichtungsstoff bekannt, der ein Urethan(meth)acrylat mit freien Isocyanatgruppen und (Meth)Acryloylgruppen, einen Photoinitiator und eine isocyanatreaktiven Verbindung, insbesondere ein Polyol oder Polyamin, enthält. Dieser Dual Cure-Beschichtungsstoff bietet die Möglichkeit, die Eigenschaftsprofile von Beschichtungsstoff und von Beschichtung zu variieren und gezielt an unterschiedliche Verwendungszwecke anzupassen.

Der Nachteil der bekannten Dual Cure-Beschichtungsstoffe liegt darin, daß es sich um sogenannte Zweikomponentensysteme handelt, bei denen die Bestandteile, die freie Isocyanatgruppen enthalten, bis zur Applikation unter Ausschluß von Wasser bzw. getrennt von den Bestandteilen, die die isocyanatreaktiven Gruppen enthalten, gelagert werden müssen, um eine vorzeitige Vernetzung zu vermeiden. Dies erfordert aber einen höheren technischen und planerischen Aufwand bei der Lagerung, der Herstellung und der Applikation.

Vorzugsweise werden die bekannten Wasserbasislacke und Klarlacke im Rahmen der Herstellung von farb- und/oder effektgebenden Mehrschichtlackierungen nach dem sogenannten Naß-in-naß-Verfahren verarbeitet. Bekanntermaßen wird bei dem Naß-in-naß-Verfahren ein Basislack auf ein grundiertes oder ungrundiertes Substrat appliziert, wonach man die resultierende Basislackschicht trocknet, mit einem Klarlack überschichtet und die resultierende Klarlackschicht gemeinsam mit der Basislackschicht härtet, wodurch die Mehrschichtlackierung aus farb-und/oder effektgebender Basislackierung und schützender Klarlackierung resultiert.

Bei dem Naß-in-naß-Verfahren weisen die einzelnen Klarlacktypen spezifische Stärken und Schwächen auf.

So können die wäßrigen Klarlacke bei oder nach ihrer Applikation ein Einbrechen in die getrocknete Wasserbasislackschicht zeigen. Pulverklarlacke können einen nicht ausreichenden Verlauf während der Härtung aufweisen, was zu strukturierten Oberflächen führt.

Nach ihrer Härtung sind Klarlackierungen auf der Basis von Zweikomponenten(2K)- oder Mehrkomponenten(3K, 4K)-Klarlacken zwar witterungsstabil, indes oftmals nicht genügend abriebfest. Mit aktinischer Strahlung härtbare Klarlacke weisen bei ihrer Härtung häufig einen starken Schrumpf auf, was zu einer Delaminierung aufgrund innerer Spannungen führt. Außerdem können sie nach ihrer Applikation auf komplexer geformte Substrate in den Schattenbereichen nur ungenügend ausgehärtet werden. Pulverslurry-Klarlacke sind mit einigen häufig angewandten Wasserbasislacken mehr oder weniger unverträglich, was zur Rißbildung (mud cracking) in der Mehrschichtlackierung und zur Delamination der Schichten führen kann.

Aus der deutschen Patentanmeldung DE-A-196 45 761 sind hydrophile selbstvernetzende Polyurethane bekannt, die olefmisch ungesättigte Gruppen und endständige blockierte Isocyanatgruppen enthalten. Die Blockierungsmittel werden indes hierin nicht näher spezifiziert. Diese bekannten hydrophilen selbstvemetzenden Polyurethane werden zur Herstellung von Pfropfmischpolymerisaten nach der Emulsionspolymerisationsmethode verwendet. Die resultierenden Dispersionen der Pfropfmischpolymerisate werden zur Herstellung von Wasserbasislacken und nicht von Klarlacken verwendet. Die Herstellung farb- und/oder effektgebender Mehrschichtlackierungen nach dem Naß-in-naß-Verfahren, bei dem Basislackschichten mit Klarlackschichten überschichtet werden, wonach man beide Schichten gemeinsam härtet, wird in der Patentanmeldung nicht angesprochen. Ebensowenig wird die Kombination von thermischer Härtung und Härtung mit aktinischer Strahlung (Dual Cure) in der Patentanmeldung beschrieben.

Aus dem deutschen Patent DE-C-197 22 862 ist ein fremdvernetzendes Pfropfmischpolymerisat bekannt, das erhältlich ist, indem man in einer Dispersion eines olefmisch ungesättigten, hydrophile funktionelle Gruppen aufweisenden Polyurethans mit im statistischen Mittel 0,05 bis 1,1 polymerisierbaren seitenständigen und/oder endständigen Doppelbindungen pro Molekül olefinisch ungesättigte Monomere polymerisiert. Die bekannten fremdvernetzenden Pfropfmischpolymerisate der DE-C-197 22 862 liegen als Primärdispersionen vor und sind sehr gut für die Herstellung wäßriger fremdvernetzender Beschichtungsstoffe, insbesondere Wasserbasislacke, geeignet. Als Vernetzungsmittel können sie blockierte Isocyanate enthalten. Die fremdvernetzenden Wasserbasislacke können mit Vorteil für die Herstellung farb-und/oder effektgebender Mehrschichtlackierungen nach dem Naß-in-naß-Verfahren verwendet werden. Das Patent beschreibt jedoch nicht die Verwendung der Primärdispersionen für die Herstellung von Klarlacken, die thermisch und mit aktinischer Strahlung gehärtet werden können.

Im Rahmen der vorliegenden Erfindung bezeichnet der Begriff "selbstvernetzend" die Eigenschaft eines Bindemittels (zu dem Begriff vgl. Römpp Lexikon Lacke und Druckfarben, Georg Thieme Verlag, Stuttgart, New York, 1998, »Bindemittel«, Seiten 73 und 74), mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind. Als fremdvernetzend werden dagegen solche Beschichtungsstoffe bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

In der nicht vorveröffentlichten deutschen Patentanmeldung DE 199 47 054.5 wird ein thermisch und mit aktinischer Strahlung härtbarer Klarlack auf der Basis einer wäßrigen Polyurethandispersion beschrieben, die Hydroxylgrupppen, blockierte Isocyanatgruppen und olefinisch ungesättigte Gruppen sowie dispergierende ionische Gruppen enthält. Die Verwendung dieser Klarlacke im Rahmen des Naß-in-Naß-Verfahrens wird hierin nicht beschrieben.

In der nicht vorveröffentlichten deutschen Patentanmeldung DE-A-199 08 013.5 wird eine strukturviskose, mit aktinischer Strahlung und thermisch härtbare Pulverslurry beschrieben, welche feste sphärische Partikel einer mittleren Teilchengröße von 0,8 bis 20 µm und einer maximalen Teilchengröße von 30 µm enthält, wobei die Pulverklarlack-Slurry einen Gehalt an Ionen bildenden dispergierenden Gruppen von 0,05 bis 1 meq/g, entsprechend einer mittleren Säurezahl oder Amin-Zahl von 3 bis 56 g KOH/g Festkörper (MEQ-Säure oder-Amin von 0,05 bis 1,0 meq/g Festkörper), vorzugsweise bis 28 (MEQ-Säure oder -Amin: 0,5) und insbesondere bis 17 (MEQ-Säure oder-Amin: 0,3), einen Gehalt an Neutralisationsmitteln von 0,05 bis 1 meq/g und eine Viskosität von (i) 50 bis 1000 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹ aufweist. Die dispergierenden Gruppen werden über separat vorliegende, thermisch vernetzbare Bindemittel in die Pulverklarlack-Slurry eingeführt.

In der nicht vorveröffentlichten deutschen Patentanmeldung DE-A-199 08 018.6 ist eine Dual Cure-Pulverklarlack-Slurry bekannt, die Bestandteile enthält, die sowohl mit aktinischer Strahlung aktivierbare Gruppen (A) als auch komplementäre reaktive funktionelle Gruppen (B), die thermische Vernetzungsreaktionen eingehen wie Hydroxylgruppen/blockierte Isocyanatgruppen oder Carboxylgruppen/Epoxidgruppen, enthalten. Der Gehalt an Säuregruppen in diesen Bestandteilen ist jedoch nicht näher spezifiziert. Außerdem dienen sie in erster Linie nicht der Dispergierung der Bestandteile, sondern deren Vernetzung.

Es besteht daher nach wie vor ein Bedarf an einem Verfahren zur Herstellung farb- und/oder effektgebender Mehrschichtlackierungen, das die Nachteile des Standes der Technik nicht mehr länger aufweist, sondern sicher und zuverlässig Mehrschichtlackierungen liefert, die, was Farbe, Effekt, Glanz und D.O.I. (distinctiveness of the reflected image) betrifft, von höchster optischer Qualität sind, eine glatte, struktur&eie, harte, flexible und kratzfeste Oberfläche haben, witterungs-, chemikalien- und etch-beständig sind, nicht vergilben und keine Rißbildung und Delamination der Schichten zeigen.

Aufgabe der vorliegenden Erfindung ist es, diesen Bedarf zu decken.

Demgemäß wurde das neue Verfahren zur Herstellung einer farb- und/oder effektgebenden Mehrschichtlackierung auf einem grundierten oder ungrundierten Substrat gefunden, bei dem man eine Basislackschicht und mindestens eine Klarlackschicht übereinander appliziert, wobei mindestens einer der Klarlacke mindestens eine wäßrige, blockierte Isocyanatgruppen enthaltende Polyurethandispersion einer Säurezahl von 5,0 bis 100mg KOH/g Dispersion enthält oder hieraus besteht, wobei das in der Polyurethandispersion enthaltene Polyurethan aus
A) mindestens einem aliphatischen Polyisocyanat mit einer Isocyanatfunktionalität von 2,0 bis 6,0,
B) mindestens einer Verbindung mit mindestens einer isocyanatreaktiven funktionellen Gruppe sowie mindestens einer mit aktinischer Strahlung aktivierbaren Bindung,
C) mindestens einer niedermolekularen aliphatischen Verbindung mit mindestens zwei isocyanatreaktiven funktionellen Gruppen,
D) mindestens einer Verbindung mit mindestens einer isocyanatreaktiven funktionellen Gruppe und mindestens einer dispergierenden funktionellen Gruppe,
E) mindestens einem Neutralisationsmittel für die dispergierenden funktionellen Gruppen der Verbindung D) sowie gegebenenfalls
G) mindestens einer von den Verbindungen B) bis E) verschiedenen Verbindung mit einer isocyanatreaktiven funktionellen Gruppe
aufgebaut ist und wobei die blockierten Isocyanatgruppen in die Polyurethandispersion
1. durch Zugabe mindestens eines blockierten Polyisocyanats vor, während und/oder nach der Herstellung des Polyurethans und/oder
2. über die Umsetzung von mindestens einem Blockierungsmittel F) für Isocyanatgruppen und/oder mindestens einer Verbindung F) mit mindestens einer blockierten Isocyanatgruppe und einer isocyanatreaktiven Gruppe mit den isocyanatgruppenhaltigen Polyurethanpräpolymeren, die aus der Umsetzung eines stöchiometrischen Überschusses der Verbindungen A) mit den Verbindungen B) sowie gegebenenfalls C) und G) sowie mit einer zur Dispergierbarkeit in wäßrigen Medien ausreichenden Menge an Verbindungen D) und E) resultieren,
eingeführt werden.

Im folgenden wird das neue Verfahren zur Herstellung einer farb- und/oder effektgebenden Mehrschichtlackierung auf einem grundierten oder ungrundierten Substrat der Kürze halber als "erfindungsgemäßes Verfahren" bezeichnet.

Weitere erfindungsgemäße Gegenstände gehen aus der Beschreibung hervor.

Im Hinblick auf den Stand der Technik war es überraschend und für den Fachmann nicht vorhersehbar, daß die Aufgabe, die der vorliegenden Erfindung zugrunde lag, mit Hilfe des erfindungsgemäßen Verfahrens gelöst werden konnte. Insbesondere war es überraschend, daß das erfindungsgemäße Verfahren farb-und/oder effektgebende Mehrschichtlackierungen liefert, die auch auf komplex geformten Substraten vollständig ausgehärtet, hochkratzfest und chemikalienbeständig sind. Besonders hervorzuheben ist, daß mit Hilfe des erfindungsgemäßen Verfahrens Mehrschichtlackierungen, die gegebenenfalls noch Grundierungen umfassen, ausschließlich auf der Basis von wäßrigen Lacken hergestellt werden können.

Das erfindungsgemäße Verfahren dient der Herstellung farb- und/oder effektgebender Mehrschichtlackierungen auf grundierten oder ungrundierten Substraten.

Als Substrate kommen alle zu lackierenden Oberflächen, die durch eine Härtung der hierauf befindlichen Lackierungen unter Anwendung von Hitze nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach ist das erfindungsgemäße Verfahren auch für Anwendungen außerhalb der Automobillackierung geeignet. Hierbei kommt es insbesondere für die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignet es sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht. Im Falle von Metall kann das Substrat auch einer Oberflächenbehandlung, beispielsweise einer Galvanisierung oder einer Phosphatierung oder Eloxierung, unterzogen worden sein

Insbesondere in der Automobilserienlackierung wird auf die vollständig ausgehärtete oder die lediglich getrocknete Elektrotauchlackierung (ETL) ein Füller oder eine Steinschlagschutzgrundierung appliziert. Diese Lackschicht wird entweder für sich alleine oder zusammen mit der darunter liegenden Elektrotauchlackschicht vollständig ausgehärtet. Die applizierte Füllerschicht kann auch lediglich getrocknet oder partiell ausgehärtet werden, wonach sie mit den darüber liegenden Lackschichten sowie gegebenenfalls mit der darunter liegenden Elektrotauchlackschicht vollständig ausgehärtet wird (erweiterte Naß-in-naß-V erfahren). Im Rahmen der vorliegenden Erfindung umfaßt der Begriff Grundierung auch die Kombination von Elektrotauchlackierung und Füllerlackierung oder Steinschlagschutzgrundierung.

Mit dem erfmdungsgemäßen Verfahren können auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Erfindungsgemäß wird in einem ersten Verfahrenschritt ein thermisch sowie gegebenenfalls mit aktinischer Strahlung härtbarer pigmentierter Basislack, insbesondere ein Wasserbasislack, auf das grundierte oder ungrundierte Substrat appliziert, wodurch die Basislackschicht resultiert.

Beispiele geeigneter Wasserbasislacke sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747 oder EP-A-0 401 565 bekannt.

Die Applikation des Wasserbasislacks kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikation kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Wasserbasislacks und seines gegebenenfalls wiederaufzubereitenden Overspray eintreten. So kann das Heißspritzen so ausgestaltet sein, daß der Wasserbasislack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Wasserbasislack selbst, betrieben wird.

Bevorzugt wird die Applikation bei Beleuchtung mit sichtbarem Licht einer Wellenlänge von über 550 µm oder unter Lichtausschluß durchgeführt, wenn der Wasserbasislack thermisch und mit aktinischer Strahlung härtbar ist. Hierdurch werden eine stoffliche Änderung oder Schädigung des Wasserbasislacks und des Overspray vermieden.

Selbstverständlich können die vorstehend beschriebenen Applikationsmethoden auch bei der Herstellung der übrigen Lackschichten im Rahmen des erfindungsgemäßen Verfahrens angewandt werden.

Im Rahmen des erfmdungsgemäßen Verfahrens wird die Wasserbasislackschicht nach ihrer Applikation thermisch oder thermisch und mit aktinischer Strahlung ausgehärtet. Wegen ihres hohen Gehalts an Pigmenten, die die aktinische Strahlung stark absorbieren und/oder streuen, wird die Wasserbasislackschicht vorzugsweise thermisch gehärtet. Hierbei werden bevorzugt die nachfolgend beschriebenen Methoden der thermischen Härtung sowie gegebenenfalls die nachfolgend beschriebenen Methoden der Härtung mit aktinischer Strahlung angewandt.

Im Rahmen des erfindungsgemäßen Verfahrens kann die thermische Härtung unmittelbar nach der Applikation der Wasserbasislackschicht erfolgen. Gegebenenfalls können hierbei die darunter liegenden, noch nicht vollständig ausgehärteten Lackschichten der Grundierung mit ausgehärtet werden. Erfindungsgemäß ist es von Vorteil, wenn die Grundierung vor der Applikation des Wasserbasislacks bereits vollständig ausgehärtet ist.

Im Rahmen des erfindungsgemäßen Verfahrens wird die Wasserbasislackschicht vorzugsweise nicht ausgehärtet, sondern nur getrocknet oder partiell ausgehärtet. D. h., daß keine der vorhandenen zur thermischen Vernetzung befähigten funktionellen Gruppen umgesetzt werden oder nur ein Teil hiervon, etwa bis zu 90, vorzugsweise bis zu 80 und insbesondere bis zu 70 Mol-%, umgesetzt wird.

Bei dem erfindungsgemäßen Verfahren wird die Wasserbasislackschicht oder die Wasserbasislackierung, insbesondere die Wasserbasislackschicht, mit einer Klarlackschicht I aus einem thermisch und mit aktinischer Strahlung härtbaren Klarlack I überschichtet. Für das erfindungsgemäße Verfahren ist es wesentlich, daß man als Klarlack I einen erfindungsgemäß zu verwendenden Klarlack verwendet, der eine wäßrige, blockierte Isocyanatgruppen enthaltende Polyurethandispersion enthält oder hieraus besteht, wobei das Polyurethan aus den nachstehend beschriebenen Ausgangsprodukten aufgebaut ist.

Im allgmeinen werden die Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Basislackierung liegt sie bei 5 bis 50, vorzugsweise 5 bis 40, besonders bevorzugt 5 bis 30 und insbesondere 10 bis 25 µm, und im Falle der Klarlackierungen liegt sie bei 10 bis 100, vorzugsweise 15 bis 80, besonders bevorzugt 20 bis 75 und insbesondere 25 bis 70 µm.

In einer ersten Variante des erfindungsgemäßen Verfahrens wird die Klarlackschicht I für sich alleine ausgehärtet. Die setzt voraus, daß die darunter liegenden Lackschichten bereits vollständig ausgehärtet sind.

In einer zweiten, bevorzugten Variante des erfmdungsgemäßen Verfahrens wird die Klarlackschicht 1 gemeinsam mit der Basislackschicht ausgehärtet.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Klarlackschicht I und zum Verdunsten von flüchtigen Bestandteilen wie Wasser sowie gegebenenfalls noch vorhandenen Lösemittel. Die Ruhezeit kann durch die Anwendung erhöhter Temperaturen bis 90 °C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

In einer ersten bevorzugten Variante erfolgt die Aushärtung der Klarlackschicht I alleine mit aktinischer Strahlung, wobei vorteilhafte technische Effekte resultieren, wenn hierbei keine Photoinitiatoren im Klarlack I angewandt werden. Vorzugsweise ist bei dieser Variante die Wasserbasislackschicht bereits vollständig oder zumindest partiell ausgehärtet.

In einer zweiten bevorzugten Variante erfolgt die Aushärtung der Klarlackschicht I thermisch und mit aktinischer Strahlung, wobei kein Photoinitiator zugegen sein braucht. Vorzugsweise ist bei dieser Variante die Wasserbasislackschicht nicht oder nur partiell ausgehärtet.

In einer weiteren Variante erfolgt die Aushärtung der Klarlackschicht I alleine thermisch, wobei Initiatoren der radikalischen Polymerisation im Klarlack I angewandt werden können. Vorzugsweise ist bei dieser Variante die Wasserbasislackschicht nicht oder nur partiell ausgehärtet.

Vorzugsweise wird die Härtung mit aktinischer Strahlung mit UV-Strahlung und/oder Elektronenstrahlen durchgeführt. Vorzugsweise wird hierbei eine Dosis von 1.000 bis 2.000, bevorzugt 1.100 bis 1.900, besonders bevorzugt 1.200 bis 1.800, ganz besonders bevorzugt 1.300 bis 1.700 und insbesondere 1.400 bis 1.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Klarlackschicht I gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der Härtung mit aktinischer Strahlung kann auch die thermische Härtung stufenweise erfolgen. Vorteilhafterweise erfolgt die thermische Härtung bei Temperaturen oberhalb 100 °C. Im allgemeinen empfiehlt es sich, hierbei Temperaturen von 180 °C, vorzugsweise 170 °C und insbesondere 150 °C nicht zu überschreiten.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Besondere Vorteile resultieren, wenn die Klarlackschicht I in zwei getrennten Verfahrensschritten zuerst mit aktinischer Strahlung und anschließend thermisch gehärtet wird.

Selbstverständlich können die vorstehend beschriebenen Härtungsmethoden im Rahmen des erfindungsgemäßen Verfahrens auch zur Härtung der übrigen Lackschichten angewandt werden.

Die durch die vorstehend beschriebene Ausführungsform des erfindungsgemäßen Verfahrens resultierende farb- und/oder effektgebende Mehrschichtlackierung kann noch mit einer Schicht aus einem organisch modifizierten Keramikmaterial, wie es beispielsweise unter der Marke Ormocer® im Handel erhältlich ist, beschichtet werden.

Bei einer alternativen Ausführungsform des erfindungsgemäßen Verfahrens wird eine Klarlackschicht I aus einem thermisch und/oder mit aktinischer strahlenhärtbaren Klarlack I auf die Oberfläche der Basislackschicht, insbesondere Wasserbasislackschicht, appliziert und
- für sich alleine partiell,
- gemeinsam mit der Basislackschicht partiell,
- gemeinsam mit der Basislackschicht vollständig oder
- für sich alleine vollständig
thermisch und/oder mit aktinischer Strahlung ausgehärtet, wobei die vorstehend im Detail beschriebenen Methoden zur Anwendung kommen.

Im Anschluß daran wird auf die Oberfläche der Klarlackschicht I oder der Klarlackierung I eine weitere Klarlackschicht II aus einem thermisch und/oder mit aktinischer Strahlung härtbaren Klarlack II appliziert, wonach man
- die Klarlackschicht II alleine oder
- gemeinsam mit den darunter liegenden noch nicht vollständig ausgehärteten Lackschichten
thermisch und/oder mit aktinischer Strahlung vollständig aushärtet, wobei die vorstehend beschriebenen Methoden zur Anwendung kommen.

Für die weitere Alternative des erfindungsgemäßen Verfahrens ist es wesentlich, daß mindestens einer der Klarlacke I oder II ein erfindungsgemäß zu verwendender Klarlack ist, der eine wäßrige, blockierte Isocyanatgruppen enthaltende Polyurethandispersion enthält oder hieraus besteht, die aus den nachstehend beschriebenen Ausgangsprodukten aufgebaut und somit thermisch und mit aktinischer Strahlung härtbar ist. Der andere Klarlack kann dann einer der eingangs beschriebenen üblichen und bekannten Klarlacke oder ein üblicher und bekannter Einkomponenten(1K)-Klarlack, wie er beispielsweise in den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071 oder EP-A-0 594 142 beschrieben wird, sein. Diese Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und gegebenenfalls carbamat- und/oder allophanatmodifizerten Aminoplastharzen als Vernetzungsmittel.

Für das erfindungsgemäße Verfahren und die hieraus resultierenden farb-und/oder effektgebenden Mehrschichtlackierungen ist es von Vorteil, wenn es sich bei dem Klarlack II um einen erfindungsgemäß zu verwendenden Klarlack handelt.

Auch bei dieser Ausführungsform des erfindungsgemäßen Verfahrens kann die resultierende farb- und/oder effektgebende Mehrschichtlackierung noch mit einer Schicht aus einem organisch modifizierten Keramikmaterial, wie es beispielsweise unter der Marke Ormocer® im Handel erhältlich ist, beschichtet werden.

Der für das erfindungsgemäße Verfahren zu verwendende thermisch und mit aktinischer Strahlung härtbare Klarlack enthält eine wäßrige, blockierte Isocyanatgruppen enthaltende Polyurethandispersion oder besteht aus dieser. In der wäßrigen, blockierte Isocyanatgruppen enthaltenden Polyurethandispersion sind mit aktinischer Strahlung aktivierbare Bindungen, isocyanatreaktive funktionelle Gruppen, blockierte Isocyanatgruppen und dispergierende funktionelle Gruppen als wesentliche funktionelle Gruppen enthalten. Die erfindungsgemäß zu verwendende wäßrige Polyurethandispersion ist daher im eingangs genannten Sinne selbstvernetzend und/oder fremdvernetzend.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff=Wasserstoff Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Besonders gut geeignete Doppelbindungen sind beispielsweise in (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen enthalten. Von diesen bieten die Acrylatgruppen ganz besondere Vorteile, weswegen sie erfindungsgemäß ganz besonders bevorzugt verwendet werden.

Beispiele geeigneter isocyanatreaktiver funktioneller Gruppen sind Thio-, Hydroxyl-, Amino- und/oder Iminogruppen, insbesondere Thio-, Hydroxyl-und/oder Aminogruppen.

Vorzugsweise sind die Isocyanatgruppen mit den aus der US-Patentschrift US-A-4.444,954 bekannten Blockierungsmitteln F) blockiert. Beispiele geeigneter Blockierungsmittel F) sind
i) Phenole wie Phenol, Cresol, Xylenol, Nitrophenol, Chlorophenol, Ethylphenol, tert.-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazol oder Triazole; sowie
xvii) Gemische dieser Blockierungsmittel, insbesondere Dimethylpyrazol und Triazole, Malonester und Acetessigsäureester oder Dimethylpyrazol und Succinimid.

Beispiele geeigneter dispergierender funktioneller Gruppen sind (potentiell) anionische Gruppen wie Carbonsäure-, Sulfonsäure- oder Phosphonsäuregruppen, insbesondere Carbonsäuregruppen. Sie sind in der erfindungsgemäß zu verwendenden Polyurethandispersion in einer Menge vorhanden, daß eine Säurezahl von 5,0 bis 100, vorzugsweise 6,0 bis 90, bevorzugt 7,0 bis 80, besonders bevorzugt 8,0 bis 70, ganz besonders bevorzugt 9,0 bis 60 und insbesondere 10 bis 50, mg KOH/g Dispersion resultiert.

Für das erfindungsgemäße Verfahren ist es wesentlich, daß das in der Polyurethandispersion enthaltene Polyurethan so aus den nachstehend beschriebenen Ausgangsprodukten hergestellt wird, daß zumindest
- die vorstehend beschriebenen dispergierenden funktionellen Gruppen,
- die vorstehend beschriebenen isocyanatreaktiven funktionellen Gruppen und
- die vorstehend beschriebenen mit aktinischer Strahlung aktivierbaren Bindungen
in dem Polyurethan vorliegen.

Liegen nur diese Gruppen und Bindungen in dem Polyurethan vor, werden die blockierten Isocyanatgruppen in der Form von blockierten Polyisocyanaten vor, während und/oder nach der Herstellung des Polyurethans in die Polyurethandispersion eingeführt, wodurch eine fremdvernetzende Polyurethandispersion resultiert.

Beispiele geeigneter blockierter Polyisocyanate sind die mit den vorstehend beschriebenen Blockierungsmitteln F) blockierten nachstehend bei der Herstellung der Polyurethane beschriebenen Polyisocyanate.

Zusätzlich oder alternativ zu dieser Ausführungsform können die blockierten Isocyanatgruppen bei der Herstellung des Polyurethans in das Molekül eingebaut werden, wodurch eine selbstvernetzende oder eine selbstvernetzende und fremdvernetzende Polyurethandispersion resultiert.

Der Einbau der blockierten Isocyanatgruppen in die Polyurethane erfolgt über die Umsetzung von mindestens einem der vorstehend beschriebenen Blockierungsmittel F) für Isocyanatgruppen und/oder mindestens einer Verbindung F) mit mindestens einer blockierten Isocyanatgruppe und einer isocyanatreaktiven Gruppe mit den isocyanatgruppenhaltigen Polyurethanpräpolymeren, die aus der Umsetzung eines stöchiometrischen Überschusses der nachstehend beschriebenen Verbindungen A) mit den Verbindungen B) sowie gegebenenfalls C) und G) sowie mit einer zur Dispergierbarkeit in wäßrigen Medien ausreichenden Menge an Verbindungen D) und E) resultieren.

Demzufolge enthält das Polyurethan
- die vorstehend beschriebenen dispergierenden funktionellen Gruppen,
- die vorstehend beschriebenen isocyanatreaktiven funktionellen Gruppen,
- die vorstehend beschriebenen mit aktinischer Strahlung aktivierbaren Bindungen und
- die blockierten Isocyanatgruppen.

Hierbei enthält das Polyurethan im statistischen Mittel vorzugsweise
- mindestens eine, bevorzugt mindestens zwei und insbesondere mindestens drei der vorstehend beschriebenen mit aktinischer Strahlung aktivierbaren Bindungen,
- mindestens eine, bevorzugt mindestens zwei und insbesondere mindestens drei der vorstehend beschriebenen blockierten Isocyanatgruppen und
- mindestens eine, bevorzugt mindestens zwei und insbesondere mindestens drei der vorstehend beschriebenen isocyanatreaktiven funktionellen Gruppen.

Die zweite Ausführungsform des Polyurethans, die alle vier der vorstehend beschriebenen funktionalen Gruppen enthält, weist besondere Vorteile auf, weswegen sie erfindungsgemäß besonders bevorzugt angewandt wird.

Das Polyurethan ist in den erfindungsgemäß zu verwendenden Polyurethandispersionen vorzugsweise in einer Menge von, bezogen auf die Dispersion, 5 bis 80, bevorzugt 10 bis 70, besonders bevorzugt 15 bis 60, ganz besonders bevorzugt 20 bis 50 und insbesondere 25 bis 40 Gew.-% enthalten.

Die wäßrige Polyurethandispersion bzw. das hierin enthaltene Polyurethan ist aufgebaut aus mindestens einem aliphatischen, inklusive cycloaliphatischen, Polyisocyanat A) mit einer Isocyanatfunktionalität von 2, 0 bis 6,0, vorzugsweise 2,0 bis 5,0, bevorzugt mit 2,0 bis 4,5 und insbesondere 2,0 bis 3,5. Im Rahmen der vorliegenden Erfindung bezeichnet der Begriff "cycloaliphätisches Diisocyanat" ein Diisocyanat, worin mindestens eine Isocyanatgruppe an einen cycloaliphatischen Rest gebunden ist.

Beispiele geeigneter cycloaliphatischer Polyisocyanate A) mit einer Isocyanatfunktionalität von 2,0 sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan Dicyclohexylmethan-2,4'-diisocyanat oder Dicyclohexylmethan-4,4'-diisocyanat, insbesondere Isophorondiisocyanat.

Beispiele geeigneter erfindungsgemäß zu verwendender acyclischer aliphatischer Diisocyanate sind Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan.

Von diesen ist Hexamethylendiisocyanat von besonderem Vorteil und wird deshalb erfindungsgemäß ganz besonders bevorzugt verwendet.

Beispiele geeigneter Polyisocyanate A) mit einer Isocyanatfunktionalität >2 sind Polyisocyanate, insbesondere auf der Basis von Hexamethylendiisocyanat, die Isocyanurat-, Biuret-, Allophanat-, Iminooxadiazindion-, Urethan-, Harnstoff Carbodiimid und/oder Uretdiongruppen aufweisen und die in üblicher und bekannter Weise aus den vorstehend beschriebenen Diisocyanaten erhältlich sind. Hiervon sind die allophanatgruppenhaltigen von Vorteil und werden deshalb erfindungsgemäß besonders bevorzugt verwendet.

Beispiele geeigneter Verbindungen B) mit mindestens einer, insbesondere einer, funktionellen Gruppe sowie mindestens einer mit aktinischer Strahlung aktivierbaren Bindung pro Molekül sind
- Allylalkohol oder 4-Butylvinylether;
- Hydroxyalkylester der Acrylsäure oder der Methacrylsäure, insbesondere der Acrylsäure, die durch Veresterung aliphatischer Diole, beispielsweise der vorstehend beschriebenen niedermolekularen Diole B), mit Acrylsäure oder Methacrylsäure oder durch Umsetzung von Acrylsäure oder Methacrylsäure mit einem Alkylenoxid erhältlich sind, insbesondere Hydroxyalkylester der Acrylsäure oder Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Bis(hydroxymethyl)cyclohexanacrylat oder - methacrylat; von diesen sind 2-Hydroxyethylacrylat und 4-Hydroxybutylacrylat besonders vorteilhaft und werden deshalb erfindungsgemäß besonders bevorzugt verwendet; oder
- Umsetzungsprodukte aus cyclischen Estern, wie z.B. epsilon-Caprolacton, und diesen Hydroxyalkyl- oder -cycloalkylestern.

Beispiele geeigneter niedermolekularer aliphatischer Verbindungen C) mit mindestens zwei, insbesondere zwei, isocyanatreaktiven funktionellen Gruppen sind Polyole, insbesondere Diole, Polyamine, insbesondere Diamine, und Aminoalkohole. Üblicherweise werden die Polyole und/oder Polyamine neben den Diolen und/oder Diaminen in untergeordneten Mengen verwendet, um Verzweigungen in die Polyurethane einzuführen. Im Rahmen der vorliegenden Erfindung sind unter untergeordneten Mengen Mengen zu verstehen, die kein Gelieren der Polyurethane bei ihrer Herstellung bewirken. Für die Aminoalkohole gilt dies sinngemäß

Beispiele geeigneter Diole C) sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5-oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, Dihydroxymethylcyclohexan, Bis(hydroxycyclohexyl)propan, Tetramethylcyclobutandiol, Cyclooctandiol oder Norbonandiol.

Beispiele geeigneter Polyole C) sind Trimethylolethan, Trimethylolpropan oder Glycerin, Pentaerythrit oder Homopentaerythrit oder Zuckeralkohole wie Threit oder Erythrit oder Pentite wie Arabit, Adonit oder Xylit oder Hexite wie Sorbit, Mannit oder Dulcit.

Beispiele geeigneter Diamine C) sind Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin oder 4,4'-Diaminodicyclohexylmethan.

Beispiele geeigneter Polyamine C) sind Diethylentriamin, Triethylentetramin, Dipropylendiamin und Dibutylentriamin.

Beispiele geeigneter Aminoalkohole C) sind Ethanolamin, Diethanolamin oder Triethanolamin.

Von diesen Verbindungen C) bietet Diethanolamin besondere Vorteile und wird deshalb erfindungsgemäß bevorzugt verwendet.

Beispiele geeigneter Verbindungen D) mit mindestens einer isocyanatreaktiven funktionellen Gruppe und mindestens einer dispergierenden funktionellen Gruppe, insbesondere einer (potentiell) anionischen Gruppe, sind Mercapto-, Hydroxy -, Amino-oder Iminobcarbonsäuren, -phosphonsäuren oder -sulfonsäuren wie Mercaptoessigsäure (Thioglykolsäure), Mercaptopropionsäure, Mercaptobernsteinsäure, Hydroxyessigsäure, Hydroxydecansäure, Hydroxydodecansäure, 12-Hydroxystearinsäure, Hydroxyethansulfonsäure, Hydroxypropansulfonsäure, Mercaptoethansulfonsäure, Mercaptopropansulfonsäure, Aminopropansulfonsäure, Glycin, Iminodiessigsäure, 2,2-Dimethylolessigsäure, 2,2-Dimethylolpropionsäure, 2,2-Dimethylolbuttersäure, 2,2-Dimenthylolpentansäure, ###,###-Diaminovaleriansäure, 3,4-Diaminobenzoesäure, 2,4-Diaminotoluolsulfonsäure oder 2,4-Diamino-diphenylethersulfonsäure. Sie werden in Mengen verwendet, daß die vorstehend beschriebenen Säurezahlen resultieren.

Beispiele für geeignete Neutralisationsmittel E) für die potentiell anionischen Gruppen der Verbindung D) sind Alkali- und Erdalkalihydroxide, -oxide, - carbonate, oder -hydrogencarbonate sowie Ammoniak oder Amine, wie z.B. Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin oder Dimethylisopropanolamin. Vorzugsweise werden die Neutralisationsmittel in einer Menge angewandt, daß ein Neutralisationsgrad von 10 bis 150, bevorzugt 20 bis 145 und insbesondere 30 bis 140% resultiert.

Beispiele geeigneter Verbindungen G), die von den Verbindungen B) bis F) verschieden sind und eine isocyanatreaktive funktionelle Gruppe aufweisen, sind Ethanol, Propanol, n-Butanol, sec.-Butanol, tert.-Butanol, Amylalkohole, Hexanole, Fettalkohole, Phenol, Allylalkohol oder Ethylhexylamin. Sie werden vorzugsweise i. V. m. höherfunktionellen Verbindungen C) verwendet, insbesondere um das Gelieren der Polyurethane bei ihrer Herstellung zu vermeiden.

Die Herstellung des erfindungsgemäß zu verwendenden Polyurethans kann so gesteuert werden, daß wäßrige Polyurethandispersionen resultieren, die flüssige Partikel enthalten. Die Teilchengröße der Partikel kann über den Gehalt an Säuregruppen gesteuert werden und breit variieren. Vorzugsweise liegen die Teilchengrößen bei 50 bis 1.000 nm, bevorzugt 100 bis 900, besonders bevorzugt 150 bis 800, ganz besonders bevorzugt 200 bis 700 und insbesondere 250 bis 600 nm.

Indes kann die Auswahl der vorstehend beschriebenen Ausgangsprodukte, insbesondere der Ausgangsprodukte D) und A), nach Art und Menge so getroffen werden, daß über die Variation von Glasübergangstemperatur und/oder Säurezahl der Polyurethane feinteilige feste Partikel resultieren, d.h., daß es sich um eine erfindungsgemäße Pulverslurry handelt. Vorzugsweise weisen diese festen feinteiligen Partikel eine mittlere Teilchengröße von 3,0 bis 10 µm, insbesondere 3,0 bis 5 µm, auf. Vorzugsweise liegen die minimalen Teilchengrößen bei 0,1, bevorzugt 0,3 und insbesondere 0,5 µm. Die maximalen Teilchengrößen liegen bei 100, bevorzugt 50 und insbesondere 30 µm.

Methodisch gesehen weist die Herstellung der wäßrigen Polyurethandispersion aus den vorstehend beschriebenen Ausgangsprodukten keine Besonderheiten auf, sondern erfolgt nach den üblichen und bekannten Methoden der Herstellung wäßriger Polyurethandispersionen, wie sie beispielsweise in den eingangs genannten, die Wasserbasislacken betreffenden Patentschriften beschrieben werden.

So wird beispielsweise in einer bevorzugten Verfahrensweise in einem ersten Verfahrenschritt mindestens eine Verbindung B) mit einem molaren Überschuß mindestens einer Verbindung A) zu einem Addukt umgesetzt, das mit aktinischer Strahlung aktivierbare Bindungen und freie Isocyanatgruppen enthält. Das Addukt wird in einem zweiten Verfahrenschritt mit mindestens einer Verbindung D) und mindestens einer Verbindung C) zu einem Isocyanatgruppen enthaltenden Präpolymeren oder einem isocyantgruppenfreien Polyurethan umgesetzt. In einem weiteren Verfahrenschritt wird mindestens ein Neutralisationsmittel E) sowie gegebenenfalls mindestens eine Verbindung G) zugesetzt, so daß ein partiell oder vollständig neutralisiertes Polyurethan oder isocyantgruppenhaltiges Präpolymer resultiert. Die freien Isocyanatgruppen des Präpolymeren werden vorzugsweise mit mindestens einer Verbindung G) und/oder C) umgesetzt, wodurch ein gegebenenfalls kettenverlängertes Polyurethan gebildet wird. Vor, während und/oder nach diesem Verfahren wird mindestens ein blockiertes Polyisocyanat zugesetzt. Das Polyurethan und/oder das Gemisch aus Polyurethan und blockiertem Polyisocyanat wird oder werden in ein wäßriges Medium überführt, wodurch die erfindungsgemäß zu verwendende fremdvernetzende Polyurethandispersion resultiert. Ist dem Polyurethan vor seiner Dispergierung kein blockiertes Polyisocyanat zugesetzt worden, wird dies nach seiner Dispergierung nachgeholt.

In einer bevorzugten Verfahrensweise wird das nach dem vorstehend beschriebenen Verfahren erhaltene neutralisierte Präpolymer mit einem Blockierungsmittel F) oder einer Verbindung F) umgesetzt. Sollten hiernach noch freie Isocyanatgruppen vorhanden sein, werden sie vorzugsweise mit mindestens einer Verbindung G) und/oder C) umgesetzt, wodurch ein gegebenenfalls kettenverlängertes Polyurethan gebildet wird. Das Polyurethan wird in ein wäßriges Medium überführt, wodurch die erfindungsgemäß zu verwendende selbstvernetzende Polyurethandispersion resultiert. Wird noch ein blockiertes Polyisocyanat zugesetzt, entsteht eine selbstvernetzende und fremdvernetzende Polyurethandispersion.

Das wäßrige Medium enthält im wesentlichen Wasser. Hierbei kann das wäßrige Medium in untergeordneten Mengen organische Lösemittel, mit aktinischer Strahlung härtbare Reaktivverdünner, Photoinitiatoren, Initiatoren der radikalischen Polymerisation, Rheologiehilfsmittel oder Verdicker und/oder sonstige lackübliche Additive und/oder sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Als strahlenhärtbare Reaktivverdünner kommen niedermolekulare polyfunktionelle ethylenisch ungesättigte Verbindungen in Betracht. Beispiele geeigneter Verbindungen dieser Art sind Ester der Acrylsäure mit Polyolen, wie Neopentylglykoldiacrylat, Trimethylolpropantriacrylat, Pentaerythrittriacrylat oder Pentaerythrittetraacrylat; oder Umsetzungsprodukte von Hydroxyalkylacrylaten mit Polyisocyanaten, insbesondere aliphatischen Polyisocyanaten. Ergänzend wird auf Römpp Lexikon Lacke und Druckfarben, Georg Thieme Verlag, Stuttgart, New York, 1998, »Reaktivverdünner«, Seite 491, verwiesen.

Sofern Photoinitiatoren mit verwendet werden, sind sie in der erfmdungsgemäß zu verwendenden Polyurethandispersion bevorzugt in Anteilen von 0,1 bis 10 Gew.-%, 1 bis 8 Gew.-% und insbesondere 2 bis 6 Gew.%, jeweils bezogen auf die Gesamtmenge der Dispersion, enthalten.

Beispiele geeigneter Photoinitiatoren sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbesondere Benzophenone, Benzoine oder Benzoinether oder Phosphinoxide. Es können auch beispielsweise die im Handel unter den Namen Irgacure® 184, Irgacure® 1800 und Irgacure® 500 der Firma Ciba Geigy, Genocure® MBF der Firma Rahn und Lucirin® TPO der Firma BASF AG erhältlichen Produkte eingesetzt werden.

Neben den Photoinitiatoren können übliche Sensibilisatoren wie Anthracen in wirksamen Mengen verwendet werden.

Des weiteren kann die erfindungsgemäße Polyurethandispersion noch mindestens einen Initiator der thermischen Vernetzung enthalten. Diese bilden ab 80 bis 120 °C Radikale, welche die Vernetzungsreaktion starten. Beispiele für thermolabile radikalische Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. C-C-spaltende Initiatoren sind besonders bevorzugt, da bei ihrer thermischen Spaltung keine gasförmigen Zersetzungprodukte gebildet werden, die zu Störungen in der Lackschicht führen könnten. Sofern sie mit verwendet werden, liegen ihre Mengen im allgemeinen zwischen 0,1 bis 10 Gew.-%, vorzugsweise 0,5 bis 8 Gew.-% und insbesondere 1 bis 5 Gew.%, jeweils bezogen auf die Gesamtmenge der Dispersion.

Geeignete Rheologiehilfsmittel oder Verdicker sind die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate; assoziative Verdickungsmittel auf der Basis von Glylolurilen; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; insbesondere Kombinationen von ionischen und nicht ionischen Verdickern, wie sie in der Patentanmeldung DE 198 41 842 zur Einstellung eines strukturviskosen Verhaltens beschrieben werden, oder die Kombination von assoziativen Verdickern auf Polyurethanbasis und Netzmitteln auf Polyurethanbasis, wie sie in der deutschen Patentanmeldung DE 198 35 296 A1 im Detail beschrieben wird.

Beispiele geeigneter weiterer lacküblicher Additive sind transparente organische und anorganische Füllstoffe, thermisch härtbare Reaktiverdünner, niedrig siedende und/oder hochsiedende organische Lösemittel ("lange Lösemittel"), UV-Absorber, Lichtschutzmittel, Radikalfänger, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel oder Flammschutzmittel. Weitere Beispiele geeigneter Lackadditive werden in dem Lehrbuch »Lackadditive« von Johan Bieleman, Wiley-VCH, Weinheim, New York, 1998, beschrieben. Sie werden in den üblichen und bekannten, wirksamen Mengen angewandt.

Vorzugsweise werden solche vorstehend genannten Zusatzstoffe ausgewählt, die mit Wasser verträglich sind und insbesondere durch Wasser nicht zersetzt werden.

Die mit Hilfe des erfmdungsgemäßen Verfahrens hergestellten farb- und/oder effektgebenden Mehrschichtlackierungen sind, was Farbe, Effekt, Glanz und D.O.I. (distinctiveness of the reflected image) betrifft, von höchster optischer Qualität, haben eine glatte, strukturfreie, harte, flexible und kratzfeste Oberfläche, sind witterungs-, chemikalien- und etch-beständig, vergilben nicht und zeigen keine Rißbildung und Delamination der Schichten.

Die mit diesen farb- und/oder effektgebenden Mehrschichtlackierungen beschichteten grundierten oder ungrundierten Substrate haben daher eine besonders hohe Gebrauchsdauer und einen besonders hohen Gebrauchswert, was sie für Hersteller, Anwender und Endverbraucher technisch und wirtschaftlich ganz besonders attraktiv macht.

### Beispiel

### Die Herstellung einer farbgebenden Mehrschichtlackierung nach dem erfindungsgemäßen Verfahren

### 1. Die Herstellung eines Allophanats aus Hexamethylendiisocyanat und 2-Hydroxyethylacrylat

Die Herstellung des Allophanats erfolgte gemäß der deutschen Patentschrift DE-A-198 60 041, Experimenteller Teil 1.1, Produkt Nr. 6. Hierzu wurde Hexamethylendiisocyanat unter Stickstoffbedeckung mit 40 Mol-% (bezogen auf das Isocyanat) 2-Hydroxyethylacrylat vermischt und auf 80°C erwärmt. Nach Zugabe von 200 Gew.-ppm (bezogen auf das Isocyanat) N,N,N-Trimethyl-N-(2-hydroxypropyl)ammonium-2-ethylhexanoat wurde die Reaktionsmischung langsam auf 120°C erhitzt und bei dieser Reaktionstemperatur gehalten. Bei einem Isocyanatgehalt der Reaktionsmischung von 13,5 Gew.% wurde die Reaktion durch Zugabe von 250 Gew.-ppm (bezogen auf das Isocyanat) Di(2-ethylhexyl)phosphat gestoppt. Die Reaktionsmischung wurde dann im Dünnschichtverdampfer bei 135°C und 2,5 mbar von nichtumgesetztem Hexamethylendiisocyanat befreit. Das resultierende Allophanat hatte nach der Destillation einen Isocyanatgehalt von 13,5 Gew.-% und eine Viskosität von 810 mPas bei 23°C.

### 2. Die Herstellung eines isocyanatgruppenhaltigen Präpolymeren

In einem Rührkessel wurden 100 Gewichtsteile des vorstehend beschriebenen Allophanats (vgl. Ziff. 1.), 0,13 Gewichtsteile 2,6-Di-tert.-butyl-p-kresol und 0,1 Gewichtsteile Hydrochinonmonomethylether vorgelegt. Nach dem Zumischen von 0,02 Gewichtsteilen Dibutylzinndilaurat von 17,5 Gewichtsteilen 3,5-Dimethylpyrazol wurde das Reaktionsgemisch während drei Stunden bei 70 °C gerührt.

### 3. Die Herstellung der wäßrigen Polyurethandispersion

Zu dem gemäß Ziff. 2. resultierenden Reaktionsgemisch wurden 3,3 Gewichtsteile Thioglykolsäure hinzugegeben. Danach wurde das Reaktionsgemisch während weiteren drei Stunden bei 70°C gerührt und hiernach abgekühlt. Der Gehalt an freien Isocyanatgruppen betrug hiernach 3 Gew.%. Nach dem Zumischen von 9,6 Gewichtsteilen Diethanolamin und 4,4 Gewichtsteilen Triethylamin (entsprechend einem Neutralisationsgrad von 120%) wurde das Reaktionsgemisch in Wasser dispergiert. Es resultierte eine stabile Dispersion mit einer z-mittleren Teilchengröße von 320 nm (gemessen mit einem PCS Malvern Zetasizer 1000) und einer Säurezahl von 6 mg KOH/g Dispersion oder 13 mg KOH/g Festkörper.

Für die Applikation wurde die Dispersion wurde auf einen Festkörpergehalt von 30 Gew.-% (1 Stunde; 130°C) eingestellt.

### 4. Die Herstellung eines erfindungsgemäß zu verwendenden Klarlacks

100 Gewichtsteile der gemäß Ziff. 3. hergestellten Dispersion wurden mit 0,1 Gewichtsteilen eines handelsüblichen Verlaufmittels (BYK® 307 der Firma Byk Chemie), 4,0 Gewichtsteilen eines handelsüblichen Photoinitiators (Genocure® MBF der Firma Rahn Chemie), 1,0 Gewichtsteilen eines handelsüblichen UV-Absorbers (Tinuvin® 1130 der Firma Ciba Specialty Chemicals) und 0,8 Gewichtsteile eines sterisch gehinderten Amins (HALS) (Tinuvin® 292 der Firma Ciba Specialty Chemicals) innig vermischt. Der Klarlack war hiernach spritzfertig.

### 5. Die Herstellung der farbgebenden Mehrschichtlackierung

Auf mit einem handelsüblichen Elektrotauchlack (Cathoguard® 500 der Firma BASF Coatings AG) kathodisch beschichteten Stahltafeln (Elektrotauchlackierung mit einer Schichtdicke von 18 - 22 µm) wurden mit einer Becherpistole zunächst ein handelsüblicher wäßriger Füller (Ecoprime® R130 der Firma BASF Coatings AG) appliziert und eingebrannt. Es resultierte eine Füllerlackierung mit einer Schichtdicke von 35 bis 40 µm. Anschließend wurde auf den Füller in gleicher Weise ein schwarzer Wasserbasislack (Basislack nachtschwarz FV96-9400 der Firma BASF Coatings AG) appliziert und während 10 min bei 80 °C vorgetrocknet. Nach dem Abkühlen der Tafeln wurde eine Schicht aus dem gemäß Ziff. 4. hergestellten Klarlack mit einer Becherpistole in einer Naßschichtdicke von 150 µm aufgetragen und während 10 min bei Raumtemperatur abgelüftet und während 5 min bei 80 °C vorgetrocknet (Naß-in-naß-V erfahren).

Anschließend wurden die Prüftafeln mit UV-Strahlung mit einer Dosis von 1.500 mJ/cm² bestrahlt. Danach wurden sie während 30 min bei 150 °C eingebrannt (Dual Cure). Es resultierte eine Basislackierung einer Schichtdicke von 16 µm und eine Klarlackierung einer Schichtdicke von 45 µm.

Die nach dem erfindungsgemäßen Verfahren hergestellte Mehrschichtlackierung wies einen hohen Glanz von 87° nach DIN 67530 und eine hohe Härte (Pendelhärte nach König: 195s) auf.

Die Kratzfestigkeit der Mehrschichtlackierung wurde nach dem Bürstentest bestimmt. Für diesen Test wurden die Prüftafeln wurden nach Applikation der Mehrschichtlackierung mindestens 2 Wochen bei Raumtemperatur gelagert, bevor die Prüfung durchgeführt wurde.

Die Kratzfestigkeit wurde mit Hilfe des in Fig. 2 auf Seite 28 des Artikels von P. Betz und A. Bartelt, Progress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:
Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Der Prüfkörper war mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrug 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült, und die Prüftafel wurden mit Druckluft trockengeblasen. Gemessen wurde der Glanz nach DIN 67530 vor und nach Beschädigung (Meßrichtung senkrecht zur Kratzrichtung):

| | |
|---|---|
| Anfang: | 8 7° |
| nach Schädigung: | 81 ° |
| 2h bei 40°C: | 84° |
| 2h bei 60°C: | 86° |

Der Bürstentest zeigte, daß die Mehrschichtlackierung eine hohe Kratzfestigkeit und ein sehr gutes Reflow-Verhalten aufwies.

Zusätzlich wurde die Kratzfestigkeit nach dem Sandtest bestimmt. Hierzu wurden die Lackoberfläche mit Sand belastet (20g Quarz-Silbersand 1,5-2,0 mm). Der Sand wurde in einen Becher (Boden plan abgeschnitten) gegeben, der fest auf der Prüftafel befestigt wurde. Es wurden die gleichen Prüftafeln wie oben im Bürstentest beschrieben verwendet. Mittels eines Motorantriebes wurde die Tafel mit dem Becher und dem Sand in Schüttelbewegungen versetzt. Die Bewegung des losen Sandes verursachte dabei die Beschädigung der Lackoberfläche (100 Doppelhübe in 20 s). Nach der Sandbelastung wurde die Prüffläche vom Abrieb gereinigt, unter einem kalten Wasserstrahl vorsichtig abgewischt und anschließend mit Druckluft getrocknet. Gemessen wurde der Glanz nach DIN 67530 vor und nach Beschädigung (Meßrichtung senkrecht zur Kratzrichtung):

| | |
|---|---|
| Anfang: | 87° |
| nach Schädigung: | 80° |
| 2h bei 40°C: | 82° |
| 2h bei 60°C: | 85° |

Der Sandtest untermauerte die hohe Kratzfestigkeit und das sehr gutes Reflow-Verhalten der Mehrschichtlackierung.

Der BART (BASF ACID RESISTANCE TEST) diente der Ermittlung der Beständigkeit der Lackoberfläche gegen Säuren, Laugen und Wassertropfen. Dabei wurde die Mehrschichtlackierung auf einem Gradientenofen weiteren Temperaturbelastungen ausgesetzt (30 min 40°C und 70°C). Zuvor wurden die Testsubstanzen (Schwefelsäure 1%-ig, 10%-ig, 36%-ig; schweflige Säure 6%-ig, Salzsäure 10%-ig, Natronlauge 5%-ig, vollentsalztes(VE)-Wasser: 1, 2 oder 3 Tropfen) definiert mit einer Dosierpipette aufgebracht. Im Anschluß an die Einwirkung der Substanzen wurden diese unter fließendem Wasser entfernt und die Beschädigungen nach 24 h entsprechend einer vorgegebenen Skala visuell beurteilt:

| **Benotung** | **Aussehen** |
|---|---|
| 0 | kein Defekt |
| 1 | leichte Markierung |
| 2 | Markierung/Vermattung/keine Erweichung |
| 3 | Markierung/Vermattung/Farbtonveränderung/Erweichung |
| 4 | Risse/beginnende Durchätzung |
| 5 | Klarlack entfernt |

Es wurde jede einzelne Markierung (Spot) ausgewertet und das Ergebnis in geeigneter Form (z.B. Notensummen für eine Temperatur) festgehalten.

Die Ergebnisse des Tests finden sich in der Tabelle.

**Tabelle : Die Säurebeständigkeit der Mehrschichtlackierung nach BART Beispiel**

| **Temperatur (°C)** | **40** | **70** |
|---|---|---|
| H₂SO₄ 1%-ig | 0 | 4,5 |
| H₂SO₄ 10%-ig | 0 | 5,0 |
| H₂SO₄ 36%-ig | 1 | 5,0 |
| HCl 10%-ig | 0 | 1,5 |
| H₂SO₃ 5%-ig | 0 | 3,0 |
| NaOH 5%-ig | 0 | 0 |
| VE-Wasser 1 | 0 | 0 |
| VE-Wasser 2 | 0 | 0 |
| VE-Wasser 3 | 0 | 0 |
| | | |
| **Summe Säure:** | **1,5** | **19** |
| **Summe Wasser:** | **0** | **0** |

Der BART untermauerte die hohe Säurebeständigkeit der Mehrschichtlackierung bzw. der Klarlackierung.

## Patentansprüche

1. Verfahren zur Herstellung einer farb- und/oder effektgebenden Mehrschichtlackierung auf einem grundierten oder ungrundierten Substrat, bei dem man eine Basislackschicht und mindestens eine Klarlackschicht übereinander appliziert, **dadurch gekennzeichnet, daß** mindestens einer der Klarlacke thermisch und mit aktinischer Strahlung härtbar ist und mindestens eine wäßrige, blockierte Isocyanatgruppen enthaltende Polyurethandispersion einer Säurezahl von 5,0 bis 100 mg KOH/g Dispersion enthält oder hieraus besteht, wobei das in der Polyurethandispersion enthaltene Polyurethan aus
A) mindestens einem aliphatischen Polyisocyanat mit einer Isocyanatfunktionalität von 2,0 bis 6,0,
B) mindestens einer Verbindung mit mindestens einer isocyanatreaktiven funktionellen Gruppe sowie mindestens einer mit aktinischer Strahlung aktivierbaren Bindung,
C) mindestens einer niedermolekularen aliphatischen Verbindung mit mindestens zwei isocyanatreaktiven funktionellen Gruppen,
D) mindestens einer Verbindung mit mindestens einer isocyanatreaktiven funktionellen Gruppe und mindestens einer dispergierenden funktionellen Gruppe,
E) mindestens einem Neutralisationsmittel für die dispergierenden funktionellen Gruppen der Verbindung D) sowie gegebenenfalls
G) mindestens einer von den Verbindungen B) bis E) verschiedenen Verbindung mit einer isocyanatreaktiven funktionellen Gruppe
aufgebaut ist und wobei die blockierten Isocyanatgruppen in die Polyurethandispersion
1. durch Zugabe mindestens eines blockierten Polyisocyanats vor, während und/oder nach der Herstellung des Polyurethans und/oder
2. über die Umsetzung von mindestens einem Blockierungsmittel F) für Isocyanatgruppen und/oder mindestens einer Verbindung F) mit mindestens einer blockierten Isocyanatgruppe und einer isocyanatreaktiven Gruppe mit den isocyanatgruppenhaltigen Polyurethanpräpolymeren, die aus der Umsetzung eines stöchiometrischen Überschusses der Verbindungen A) mit den Verbindungen B) sowie gegebenenfalls C) und G) sowie mit einer zur Dispergierbarkeit in wäßrigen Medien ausreichenden Menge an Verbindungen D) und E) resultieren,
eingeführt werden.

2. Thermisch und mit aktinischer Strahlung härtbare Pulverslurry, die mindestens eine wäßrige Polyurethandispersion aus feinteiligen, festen Partikeln enthält oder hieraus besteht, **dadurch gekennzeichnet, daß** die Polyurethandispersion eine Säurezahl von 5,0 bis 100 mg KOH/g Dispersion aufweist und blockierte Isocyanatgruppen enthält, wobei das in der Polyurethandispersion enthaltene Polyurethan aus
A) mindestens einem aliphatischen Polyisocyanat mit einer Isocyanatfunktionalität von 2,0 bis 6,0,
B) mindestens einer Verbindung mit mindestens einer isocyanatreaktiven funktionellen Gruppe sowie mindestens einer mit aktinischer Strahlung aktivierbaren Bindung,
C) mindestens einer niedermolekularen aliphatischen Verbindung mit mindestens zwei isocyanatreaktiven funktionellen Gruppen,
D) mindestens einer Verbindung mit mindestens einer isocyanatreaktiven funktionellen Gruppe und mindestens einer dispergierenden funktionellen Gruppe,
E) mindestens einem Neutralisationsmittel für die dispergierenden funktionellen Gruppen der Verbindung D) sowie gegebenenfalls
G) mindestens einer von den Verbindungen B) bis E) verschiedenen Verbindung mit einer isocyanatreaktiven funktionellen Gruppe
aufgebaut ist und wobei die blockierten Isocyanatgruppen in die Polyurethandispersion
1. durch Zugabe mindestens eines blockierten Polyisocyanats vor, während und/oder nach der Herstellung des Polyurethans und/oder
2. über die Umsetzung von mindestens einem Blockierungsmittel F) für Isocyanatgruppen und/oder mindestens einer Verbindung F) mit mindestens einer blockierten Isocyanatgruppe und einer isocyanatreaktiven Gruppe mit den isocyanatgruppenhaltigen Polyurethanpräpolymeren, die aus der Umsetzung eines stöchiometrischen Überschusses der Verbindungen A) mit den Verbindungen B) sowie gegebenenfalls C) und G) sowie mit einer zur Dispergierbarkeit in wäßrigen Medien ausreichenden Menge an Verbindungen D) und E) resultieren, eingeführt werden.

3. Das Verfahren nach Anspruch 1, **dadurch gekennzeichnet, daß** man
(1) eine Basislackschicht aus einem thermisch sowie gegebenenfalls mit aktinischer Strahlung härtbaren pigmentierten Basislack auf die Oberfläche des Substrats appliziert und,
(1.1) ohne auszuhärten, trocknet oder partiell aushärtet oder
(1.2) thermisch sowie gegebenenfalls mit aktinischer Strahlung vollständig aushärtet,
wonach man
(2) eine Klarlackschicht I aus dem thermisch und mit aktinischer Strahlung härtbaren Klarlack I auf die Oberfläche der Basislackschicht oder der Basislackierung appliziert und
(2.1) gemeinsam mit der Basislackschicht oder
(2.2) für sich alleine
vollständig thermisch und/oder mit aktinischer Strahlung aushärtet; oder alternativ
(2) eine Klarlackschicht I aus einem thermisch und/oder mit aktinischer Strahlung härtbaren Klarlack I auf die Oberfläche der Basislackschicht oder der Basislackierung appliziert und
(2.1) für sich alleine partiell,
(2.2) gemeinsam mit der Basislackschicht partiell oder
(2.3) gemeinsam mit der Basislackschicht vollständig oder
(2.4) für sich alleine vollständig
thermisch und/oder mit aktinischer Strahlung aushärtet, wonach man
(3) eine weitere Klarlackschicht II aus einem thermisch und/oder mit aktinischer Strahlung härtbaren Klarlack II auf die Oberfläche der Klarlackschicht I oder der Klarlackierung I appliziert, wobei mindestens eine der Klarlackschichten 1 und II ein thermisch und mit aktinischer Strahlung härtbare Klarlack ist, wonach man
(3.1) die Klarlackschicht II alleine oder
(3.2) gemeinsam mit den darunterliegenden noch nicht vollständig ausgehärteten Lackschichten
thermisch und/oder mit aktinischer Strahlung vollständig aushärtet.

4. Das Verfahren nach Anspruch 1 oder 3 und die Pulverslurry nach Anspruch 2, **dadurch gekennzeichnet, daß** das in der Polyurethandispersion enthaltene Polyurethan mit aktinischer Strahlung aktivierbare Bindungen, isocyanatreaktive funktionelle Gruppen, blockierte Isocyanatgruppen und dispergierende funktionelle Gruppen, insbesondere (partiell) anionische Gruppen, enthält.

5. Das Verfahren nach einem der Ansprüche 1, 3 oder 4 und die Pulverslurry nach Anspruch 2 oder 4, **dadurch gekennzeichnet, daß** als Verbindungen A) Isocyanurat-, Biuret-, Allophanat-, Iminooxadiazindion-, Urethan-, Harnstoff- Carbodiimid und/oder Uretdiongruppen aufweisende aliphatische Polyisocyanate verwendet werden.

6. Das Verfahren nach einem der Ansprüche 1 oder 3 bis 5 und die Pulverslurry nach einem der Ansprüche 2, 4 oder 5, **dadurch gekennzeichnet, daß** als mit aktinischer Strahlung aktivierbare Bindungen Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor-oder Kohlenstoff Silizium-Einzelbindungen oder -Doppelbindungen verwendet werden.

7. Das Verfahren und die Pulverslurry nach Anspruch 6, **dadurch gekennzeichnet, daß** die Doppelbindungen als (Meth)Acrylat-, Ethacrylat-, Crotonat-, Cinnamat-, Vinylether-, Vinylester-, Dicyclopentadienyl-, Norbornenyl-, Isoprenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen vorliegen.

8. Das Verfahren nach einem der Ansprüche 1 oder 3 bis 7 und die Pulverslurry nach einem der Ansprüche 2 oder 4 bis 7, **dadurch gekennzeichnet, daß** als isocyanatreaktive funktionelle Gruppen Thio-, Hydroxyl-, Amino- Imino-, Carbamat- und/oder Allophanatgruppen, insbesondere Thio-, Hydroxyl- und Aminogruppen, verwendet werden.

9. Das Verfahren nach einem der Ansprüche 1 oder 3 bis 8 und die Pulverslurty nach einem der Ansprüche 2 oder 4 bis 8, **dadurch gekennzeichnet, daß** als (potentiell) anionische Gruppen Carbonsäure-, Sulfonsäure- oder Phosphonsäuregruppen, insbesondere Carbonsäuregruppen, verwendet werden.

10. Das Verfahren nach einem der Ansprüche 1 oder 3 bis 9 und die Pulverslurry nach einem der Ansprüche 2 oder 4 bis 9, **dadurch gekennzeichnet, daß** als Blockierungsmittel Oxime und/oder substituierte Pyrazole, insbesondere Ketoxime und/oder Dimethylpyrazol, verwendet werden.

11. Das Verfahren nach einem der Ansprüche 1 oder 3 bis 10 und die Pulverslurry nach einem der Ansprüche 2 oder 4 bis 10, **dadurch gekennzeichnet, daß** mindestens einer der Klarlacke I und/oder II mindestens einen Photoinitiator, mindestens einen Reaktivverdünner für die Härtung mit aktinischer Strahlung mindestens einen Initiator der thermischen Vernetzung und/oder mindestens ein lackübliches Additiv enthält.

12. Farb- und/oder effektgebende Mehrschichtlackierungen auf grundierten oder ungrundierten Substraten, herstellbar mit Hilfe des Verfahrens gemäß einem der Ansprüche 1 oder 3 bis 11 und/oder mit Hilfe der Pulverslurry gemäß einem der Ansprüche 2 oder 4 bis 11.

## Claims

1. Process for producing a multicoat color and/or effect paint system on a primed or unprimed substrate wherein a basecoat film and at least one clearcoat film are applied one atop the other, **characterized in that** at least one of the clearcoat materials is curable thermally and with actinic radiation and comprises or consists of at least one aqueous polyurethane dispersion which contains blocked isocyanate groups and which has an acid number of from 5.0 to 100 mg KOH/g dispersion, the polyurethane contained in the polyurethane dispersion being composed of
A) at least one aliphatic polyisocyanate having an isocyanate functionality of from 2.0 to 6.0,
B) at least one compound containing at least one isocyanate-reactive functional group and at least one bond which can be activated with actinic radiation,
C) at least one low molecular mass aliphatic compound containing at least two isocyanate-reactive functional groups,
D) at least one compound containing at least one isocyanate-reactive functional group and at least one dispersive functional group,
E) at least one neutralizing agent for the dispersive functional groups of the compound D), and, if desired,
G) at least one compound other than compounds B) to E), containing an isocyanate-reactive functional group,
and the blocked isocyanate groups being introduced into the polyurethane dispersion
1. by adding at least one blocked polyisocyanate before, during and/or after the preparation of the polyurethane and/or
2. by way of the reaction of at least one blocking agent F) for isocyanate groups and/or at least one compound F) containing at least one blocked isocyanate group and one isocyanate-reactive group with the polyurethane prepolymers containing isocyanate groups that result from the reaction of a stoichiometric excess of the compounds A) with the compounds B) and also, where appropriate, C) and G) and also with an amount of compounds D) and E) that is sufficient for dispersibility in aqueous media.

2. Powder slurry curable thermally and with actinic radiation, consisting of or comprising at least one aqueous polyurethane dispersion comprising finely divided solid particles, **characterized in that** the polyurethane dispersion has an acid number of from 5.0 to 100 mg KOH/g dispersion and contains blocked isocyanate groups, the polyurethane contained in the polyurethane dispersion being composed of
A) at least one aliphatic polyisocyanate having an isocyanate functionality of from 2.0 to 6.0,
B) at least one compound containing at least one isocyanate-reactive functional group and at least one bond which can be activated with actinic radiation,
C) at least one low molecular mass aliphatic compound containing at least two isocyanate-reactive functional groups,
D) at least one compound containing at least one isocyanate-reactive functional group and at least one dispersive functional group,
E) at least one neutralizing agent for the dispersive functional groups of the compound D), and, if desired,
G) at least one compound other than compounds B) to E), containing an isocyanate-reactive functional group,
and the blocked isocyanate groups being introduced into the polyurethane dispersion
1. by adding at least one blocked polyisocyanate before, during and/or after the preparation of the polyurethane and/or
2. by way of the reaction of at least one blocking agent F) for isocyanate groups and/or at least one compound F) containing at least one blocked isocyanate group and one isocyanate-reactive group with the polyurethane prepolymers containing isocyanate groups that result from the reaction of a stoichiometric excess of the compounds A) with the compounds B) and also, where appropriate, C) and G) and also with an amount of compounds D) and E) that is sufficient for dispersibility in aqueous media.

3. The process according to claim 1, **characterized in that**
(1) a film of a pigmented basecoat material curable thermally and also, where appropriate, with actinic radiation is applied to the surface of the substrate and,
(1.1) without being cured, is dried or partly cured or
(1.2) is fully cured thermally and, where appropriate, with actinic radiation,
and then
(2) a clearcoat film I of the clearcoat material I curable thermally and with actinic radiation is applied to the surface of the basecoat film or the basecoat and is fully cured
(2.1) together with the basecoat film or
(2.2) on its own
thermally and/or with actinic radiation;
or alternatively
(2) a clearcoat film I of a clearcoat material I curable thermally and/or with actinic radiation is applied to the surface of the basecoat film or the basecoat and is cured
(2.1) partly, on its own,
(2.2) partly, together with the basecoat film or
(2.3) fully, together with the basecoat film, or
(2.4) fully, on its own
thermally and/or with actinic radiation, and then
(3) a further clearcoat film II of a clearcoat material II curable thermally and/or with actinic radiation is applied to the surface of the clearcoat film I or the clearcoat I, at least one of the clearcoat films I and II being of a clearcoat material curable thermally and with actinic radiation, and then
(3.1) the clearcoat film II is fully cured alone or
(3.2) together with the underlying not yet fully cured coating films
thermally and/or with actinic radiation.

4. The process according to claim 1 or 3 and the powder slurry according to claim 2, **characterized in that** the polyurethane present in the polyurethane dispersion contains bonds which can be activated with actinic radiation, isocyanate-reactive functional groups, blocked isocyanate groups, and dispersive functional groups, especially (partially) anionic groups.

5. The process according to any of claims 1, 3 or 4 and the powder slurry according to claim 2 or 4, **characterized in that** aliphatic polyisocyanates containing isocyanurate, biuret, allophanate, iminooxadiazinedione, urethane, urea, carbodiimide and/or uretdione groups are used as compounds A).

6. The process according to any of claims 1 or 3 to 5 and the powder slurry according to any of claims 2, 4 or 5, **characterized in that** said bonds which can be activated with actinic radiation comprise carbon-hydrogen single bonds or carbon-carbon, carbon-oxygen, carbon-nitrogen, carbon-phosphorus or carbon-silicon single bonds or double bonds.

7. The process and the powder slurry according to claim 6, **characterized in that** the double bonds are in the form of (meth)acrylate, ethacrylate, crotonate, cinnamate, vinyl ether, vinyl ester, dicyclopentadienyl, norbornenyl, isoprenyl, isopropenyl, allyl or butenyl groups; dicyclopentadienyl ether, norbornenyl ether, isoprenyl ether, isopropenyl ether, allyl ether or butenyl ether groups; or dicyclopentadienyl ester, norbornenyl ester, isoprenyl ester, isopropenyl ester, allyl ester or butenyl ester groups.

8. The process according to any of claims 1 or 3 to 7 and the powder slurry according to any of claims 2 or 4 to 7, **characterized in that** said isocyanate-reactive functional groups comprise thio, hydroxyl, amino, imino, carbamate and/or allophanate groups, especially thio, hydroxyl, and amino groups.

9. The process according to any of claims 1 or 3 to 8 and the powder slurry according to any of claims 2 or 4 to 8, **characterized in that** said (potentially) anionic groups comprise carboxylic acid, sulfonic acid or phosphonic acid groups, especially carboxylic acid groups.

10. The process according to any of claims 1 or 3 to 9 and the powder slurry according to any of claims 2 or 4 to 9, **characterized in that** said blocking agents comprise oximes and/or substituted pyrazoles, especially ketoximes and/or dimethylpyrazole.

11. The process according to any of claims 1 or 3 to 10 and the powder slurry according to any of claims 2 or 4 to 10, **characterized in that** at least one of the clearcoat materials I and/or II comprises at least one photoinitiator, at least one reactive diluent for curing with actinic radiation, at least one thermal crosslinking initiator and/or at least one customary coatings additive.

12. A multicoat color and/or effect paint system on a primed or unprimed substrate, producible by means of the process according to any of claims 1 or 3 to 11 and/or by means of the powder slurry according to any of claims 2 or 4 to 11.

## Revendications

1. Procédé pour la production d'un revêtement de peinture colorant et/ou à effet sur un subjectile muni ou non d'un primaire, dans lequel on applique l'une sur l'autre une couche de peinture de fond et au moins une couche de vernis, **caractérisé en ce qu'**au moins l'un des vernis est durcissable thermiquement et par un rayonnement actinique et contient ou consiste en au moins une dispersion aqueuse de polyuréthanne contenant des groupes isocyanate bloqués, ayant un indice d'acide de 5,0 à 100 mg de KOH/g de dispersion, le polyuréthanne contenu dans la dispersion de polyuréthanne étant constitué de
(A) au moins un polyisocyanate aliphatique ayant une fonctionnalité isocyanate de 2,0 à 6,0,
(B) au moins un composé comportant au moins un groupe fonctionnel réactif avec un isocyanate ainsi qu'au moins une liaison activable par un rayonnement actinique,
(C) au moins un composé aliphatique de faible masse moléculaire, comportant au moins deux groupes fonctionnels réactifs avec un isocyanate,
(D) au moins un composé comportant au moins un groupe fonctionnel réactif avec un isocyanate et au moins un groupe fonctionnel dispersant,
(E) au moins un agent de neutralisation pour les groupes fonctionnels dispersants du composé D), ainsi qu'éventuellement
(G) au moins un composé comportant un groupe fonctionnel réactif avec un isocyanate, différent des composés B) à E).
et les groupes isocyanates bloqués étant introduits dans la dispersion de polyuréthanne
1. par addition d'au moins un polyisocyanate bloqué, avant, pendant et/ou après la préparation du polyuréthanne et/ou
2. par la réaction d'au moins un agent de blocage F) pour groupes isocyanates et/ou d'au moins un composé F) comportant au moins un groupe isocyanate bloqué et un groupe réactif avec un isocyanate avec les prépolymères polyuréthanne contenant des groupes isocyanate, qui résultent de la réaction d'un excès stoechiométrique des composés A) avec les composés B) ainsi qu'éventuellement C) et G) ainsi qu'avec une quantité suffisante de composés D) et E) pour la dispersibilité dans des milieux aqueux.

2. Dispersion de poudre durcissable thermique et par un rayonnement actinique, qui contient ou consiste en au moins une dispersion aqueuse de polyuréthanne à base de particules solides finement divisées, **caractérisée en ce que** la dispersion de polyuréthanne présente un indice d'acide de 5,0 à 100 mg de KOH/g de dispersion et contient des groupes isocyanate bloqués, le polyuréthanne contenu dans la dispersion de polyuréthanne étant constitué de
(A) au moins un polyisocyanate aliphatique ayant une fonctionnalité isocyanate de 2,0 à 6,0,
(B) au moins un composé comportant au moins un groupe fonctionnel réactif avec un isocyanate ainsi qu'au moins une liaison activable par un rayonnement actinique,
(C) au moins un composé aliphatique de faible masse moléculaire, comportant au moins deux groupes fonctionnels réactifs avec un isocyanate,
(D) au moins un composé comportant au moins un groupe fonctionnel réactif avec un isocyanate et au moins un groupe fonctionnel dispersant,
(E) au moins un agent de neutralisation pour les groupes fonctionnels dispersants du composé D), ainsi qu'éventuellement
(G) au moins un composé comportant un groupe fonctionnel réactif avec un isocyanate, différent des composés B) à E)
et les groupes isocyanates bloqués sont introduits dans la dispersion de polyuréthanne
1. par addition d'au moins un polyisocyanate bloqué, avant, pendant et/ou après la préparation du polyuréthanne et/ou
2. par la réaction d'au moins un agent de blocage F) pour groupes isocyanates et/ou d'au moins un composé F) comportant au moins un groupe isocyanate bloqué et un groupe réactif avec un isocyanate avec les prépolymères polyuréthanne contenant des groupes isocyanate, qui résultent de la réaction d'un excès stoechiométrique des composés A) avec les composés B) ainsi qu'éventuellement C) et G) ainsi qu'avec une quantité suffisante de composés D) et E) pour la dispersibilité dans des milieux aqueux.

3. Procédé selon la revendication 1, **caractérisé en ce que**
(1) on applique sur la surface du subjectile une couche de peinture de fond à partir d'une peinture de fond pigmentée, durcissable thermiquement ainsi qu'éventuellement par un rayonnement actinique,
(1.1) on la fait sécher sans la faire durcir complètement ou on la fait durcir partiellement ou
(1.2) on la fait complètement durcir thermiquement ainsi qu'éventuellement par un rayonnement actinique,
puis
(2) on applique sur la surface de la couche de peinture de fond ou sur le revêtement de peinture de fond une couche de vernis I à partir du vernis I durcissable thermiquement et par un rayonnement actinique et on la fait complètement durcir thermiquement et/ou par un rayonnement actinique
(2.1) conjointement avec la couche e peinture de fond ou
(2.2) seule ;
ou encore
(2) on applique sur la surface de la couche de peinture de fond ou sur le revêtement de peinture de fond une couche de vernis I à partir d'un vernis I durcissable thermiquement et par un rayonnement actinique et on la fait complètement durcir thermiquement et/ou par un rayonnement actinique
(2.1) seule partiellement,
(2.2) partiellement conjointement avec la couche de peinture de fond ou
(2.3) complètement conjointement avec la couche de peinture de fond ou
(2.4) seule complètement
puis
(3) on applique sur la surface de la couche de vernis I ou sur le revêtement de vernis I une autre couche de vernis II à partir d'un vernis II durcissable thermiquement et/ou par un rayonnement actinique, au moins l'une des couches de vernis I et II étant un vernis durcissable thermiquement et par un rayonnement actinique, puis on fait complètement sécher thermiquement et/ou par un rayonnement actinique
(3.1) la couche de vernis II seule ou
(3.2) conjointement avec les couches de vernis sous-jacentes, non encore totalement durcies.

4. Procédé selon la revendication 1 ou 3, et dispersion de poudre selon la revendication 2, **caractérisés en ce que** le polyuréthanne contenu dans la dispersion de polyuréthanne comporte des liaisons activables par un rayonnement actinique, des groupes fonctionnels réactifs avec un isocyanate, des groupes isocyanates bloqués et des groupes fonctionnels dispersants, en particulier des groupes (partiellement anioniques).

5. Procédé selon l'une quelconque des revendications 1, 3 et 4 et dispersion de poudre selon la revendication 2 ou 4, **caractérisés en ce qu'**on utilise en tant que composés (A) des polyisocyanates aliphatiques comportant des groupes isocyanurate, biuret, allophanate, imino-oxadiazinedione, uréthanne, urée, carbodiimide et/ou uretdione.

6. Procédé selon l'une quelconque des revendications 1 et 3 à 5 et dispersion de poudre selon l'une quelconque des revendications 2, 4 et 5, **caractérisés en ce que** qu'on utilise en tant que liaisons activables par un rayonnement actinique des liaison simples carbone-hydrogène ou des liaisons simples ou doubles carbone-carbone, carbone-oxygène, carbone-azote, carbone-phosphore ou carbone-silicium.

7. Procédé et dispersion de poudre selon la revendication 6, **caractérisés en ce que** les doubles liaisons sont présentes sous forme de groupes (méth)acrylate, éthacrylate, crotonate, cinnamate, éther vinylique, ester vinylique, dicyclopentadiényle, norbornényle, isoprényle, isopropényle, allyle ou butényle ; des groupes éther dicyclopentadiénylique, norbornénylique, isoprénylique, isopropénylique, allylique ou buténylique, ou des groupes ester dicyclopentadiénylique, norbornénylique, isoprénylique, isopropénylique, allylique ou buténylique.

8. Procédé selon l'une quelconque des revendications 1 et 3 à 7 et dispersion de poudre selon l'une quelconque des revendications 2 ou 4 à 7, **caractérisés en ce qu'**on utilise en tant que groupes fonctionnels réactifs avec un isocyanate des groupes thio, hydroxy, amino, imino, carbamate et/ou allophanate, en particulier des groupes thio, hydroxy et amino.

9. Procédé selon l'une quelconque des revendications 1 et 3 à 8 et dispersion de poudre selon l'une quelconque des revendications 2 et 4 à 8, **caractérisés en ce qu'**on utilise comme groupes (potentiellement) anioniques des groupes carboxy, sulfo ou phosphono, en particulier des groupes carboxy.

10. Procédé selon l'une quelconque des revendications 1 et 3 à 9 et dispersion de poudre selon l'une quelconque des revendications 2 et 4 à 9, **caractérisés en ce qu'**on utilise comme agent de blocage des oximes et/ou des pyrazoles substitués, en particulier des cétoximes et/ou le diméthylpyrazole.

11. Procédé selon l'une quelconque des revendications 1 et 3 à 10 et dispersion de poudre selon l'une quelconque des revendications 2 et 4 à 10, **caractérisés en ce qu'**au moins l'un des vernis I et/ou II contient au moins un photoamorceur, au moins un diluant réactif pour le durcissement par un rayonnement actinique, au moins un amorceur de la réticulation thermique et/ou au moins un additif usuel dans des peintures.

12. Revêtements de peinture multicouches colorants et/ou à effet sur des subjectiles munis ou non d'un primaire, pouvant être produits à l'aide du procédé selon l'une quelconque des revendications 1 et 3 à 11 et/ou à l'aide de la dispersion de poudre selon l'une quelconque des revendications 2 et 4 à 11.
